Europäisches Patentamt

European Patent Office

Office européen des brevets

(11) Publication number: **0 374 128**
**A2**

# EUROPEAN PATENT APPLICATION

(21) Application number: **90101121.3**

(22) Date of filing: **28.06.83**

(51) Int. Cl.5: **H04N 11/08**

This application was filed on 20 - 01 - 1990 as a divisional application to the application mentioned under INID code 60.

(30) Priority: **07.07.82 IT 2227682**

(43) Date of publication of application:
**20.06.90 Bulletin 90/25**

(60) Publication number of the earlier application in accordance with Art.76 EPC: **0 099 341**

(84) Designated Contracting States:
**DE FR GB**

(71) Applicant: **RAI RADIOTELEVISIONE ITALIANA**
**Viale Mazzini 14**
**I-00195 Rome(IT)**

(72) Inventor: **D'Amato, Paolo**
**Via Monte Ortigara, 35**
**I-10100 Torino(IT)**
Inventor: **Salvadorini, Rolando**
**Via Ventimiglia, 98**
**I-10100 Torino(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) **Method of transmitting and receiving color television signals on two channels for broadcasting from satellite and apparatus for carrying out said method.**

(57) In order to improve the quality of color television signals for broadcasting via satellite the signals are transmitted on two of the channels available for transmissions via satellite according to the rules established by CCIR.

On the first channel the luminance information in the whole available band is transmitted and on the second channel the chrominance information R-Y and B-Y in the whole available band is transmitted, according to the following two alternatives:

1) the information is transmitted by means of a time division multiplex, i.e. in the first half of the active line there is transmitted one of the chrominance components and in the second half the other component;

2) the information is transmitted by means of a frequency sharing multiplex, i.e. one of the components is transmitted in baseband, i.e. from O to about 3 MHz and the other component is transmitted on an amplitude modulated subcarrier with single side band or vestigial band.

Fig. 1

# METHOD OF TRANSMITTING AND RECEIVING COLOR TELEVISION SIGNALS ON TWO CHANNELS FOR BROADCASTING FROM SATELLITE AND APPARATUS FOR CARRYING OUT SAID METHOD

The present invention relates to the transmission and reception of color television signals.

It is well known that by the present color television transmission methods it is not possible to offer the user a television signal which is free of cross-color and cross-luminance defects due to interlacing of luminance and chrominance spectra. This is due to the fact that at present the color television signals are transmitted on a single channel and any attempt to eliminate said defects would bring to such complications as to discourage any approach in this sense. The difficulty could be overcome by subdividing the color television signal in two channels, but this would involve the requirement of modifying the present television standards with all the complications which would derive therefrom.

These considerations apply, however, only to transmissions of color television signals in the normal earth network.

For direct broadcasting from satellite, which is a new service which has not yet been adopted in any European country, it is possible to imagine different standards provided they are compatible with the standard rules established by WARC-77. One of these rules is that the interferences produced by the new signal on other channels must not be higher than those produced by a normal NTSC, PAL or SECAM signal. It is easily understood that once these rules are met, the broadcasting from satellite, by making possible the transmission on a plurality of channels, makes it possible to furnish the users with a signal having a higher quality than the present signals.

It is an object of the present invention to provide a method of transmitting color television signals for broadcasting from satellite comprising the steps of transmitting the television signal on two channels.

The method of transmitting color television signals on two channels according to the invention is characterized in that it comprises the steps of transmitting the luminance information in the whole available band on the first channel and the R-Y and B-Y chrominance information in the whole available band on the second channel.

It is a further object ot the invention an apparatus for carrying out the method.

The invention will be better understood from the following detailed description, given merely by way of example and therefore in no limiting sense, of two embodiments thereof referring to the accompanying drawings in which:

Fig. 1 is a block diagram of an apparatus according to the invention with time division in the second channel;

Fig. 2 is a graph of a signal generated in the apparatus of Fig. 1;

Fig. 3 is a block diagram of an apparatus according to the invention with frequency sharing multiplex in the second channel;

Fig. 4 is a graph of the spectrum of a signal generated in the apparatus of Fig. 3; and

Fig. 5 is a graph of a signal appearing in the apparatus of Fig. 3.

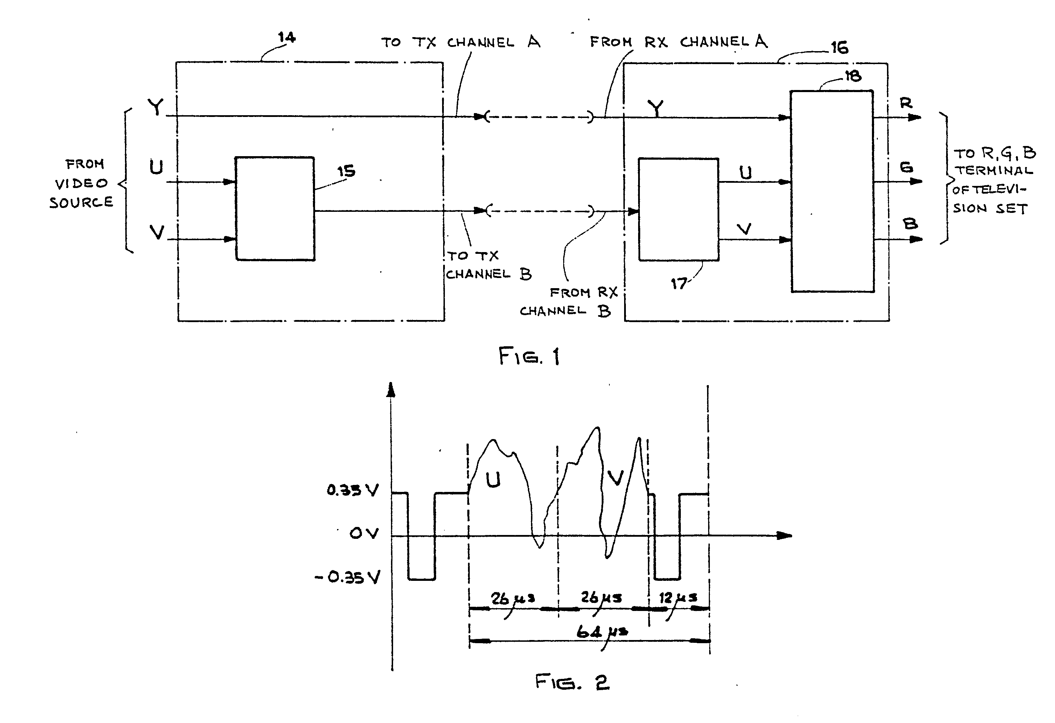

In Fig. 1 is shown a non compatible apparatus with time division multiplex in the channel B. This apparatus is provided for the transmission on the channel A of the luminance information in the whole available band and the transmission on the channel B of the chrominance (R-Y B-Y) information in the whole available band (by available band is meant the portion not occupied by audio subcarriers) by a time division multiplex, i.e. one of the two chrominance components is transmitted in the first half of the active line and the other component in the second half.

The feature of the apparatus of Fig. 1 is that it comprises in the transmitter 14 a compressor 15 and in the receiver 16 an expander 17 whose two outputs are connected to two inputs of a matrix 10.

The compressor generates the signal shown in Fig. 2.

In the 52 $\mu$s forming the "active" portion of the line there are present the signals U and V (or V and U) time compressed with a ratio 1:2. The synchronisms are those of a normal black and white video signal but the line blanking is shifted to the "grey" level (0,35 V) inasmuch as the U and V signals are at a O average value. The Y, U and V signals are those conventional of PAL.

In both channels the shape of the synchronizing signals can be changed. In particular there can be inserted audio channels PCM transmitted with the well known "Sound-in-Syncs", system, or the duration of the line blanking (which in Fig. 2 is 12 $\mu$s) can be reduced in order to suitably increase the duration of the active portion of the line, thus widening the size of the image, which is particularly useful for large screen vision, inasmuch as a width-height ratio higher than the present (4/3) is subjectively more appreciated.

It is also possible to increase the number of the scanning lines in order to improve the vertical definition, by reducing proportionally the horizontal one; everything without departing from the scope of the invention.

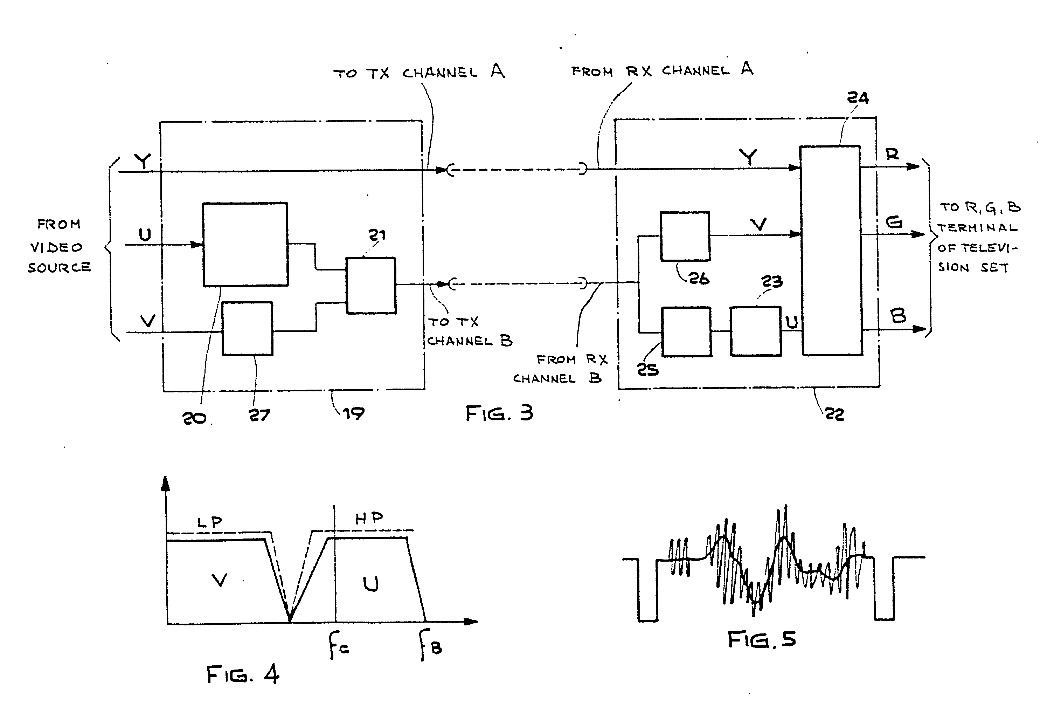

In Fig. 3 an apparatus is shown providing the non compatible version of the proposed system with frequency sharing multiplex in the channel B. This apparatus is provided for the transmission on the channel A of the luminance information in the whole available band (like the apparatus of Fig. 1) and for the transmission on the channel B of the chrominance (R-Y, B-Y) information in the whole available band by means of a frequency sharing multiplex, i.e. one of the chrominance components is transmitted in baseband, i.e. from O to about 3 MHz (better the R-Y component inasmuch as it is more influenced by noise) and the other component is transmitted on an amplitude modulated or single lateral (higher) band or vestigial band subcarrier when it is desired a lower complexity of the modulators and demodulators at the cost of a non optimal use of the available spectrum.

The feature of the apparatus of Fig. 3 is that it comprises in the transmitter 19 a modulator 20 having the output connected to an input of an adder 21 connected with a second input to the output of a low pass filter 27 which limits the spectrum of the baseband transmitted component, and in the receiver 22 a demodulator 23 having the output connected to a matrix 24 and the input connected to the output of a high pass filter 25 which has, in turn, the input connected to the receiving apparatus of the channel B to which also the input of a low pass filter 26 is connected having the output connected to a second input of the matrix 24.

In the case of transmission on vestigial band subcarrier the spectrum of the signal going to the TX channel B is that shown in Fig. 4.

The value of the U modulated subcarrier depends on the band $f_B$ available in the channel B and the type of modulation (side band or vestigial). For example with $f_B$ = 8 and vestigial band modulation the subcarrier $f_C$ can be located in the area of 4, 8 ÷ 5 MHz.

The video signal is shown in Fig. 5.

Like in the preceding cases the synchronisms are of the conventional type, but the line blanking is raised to + 0,35 V inasmuch as the V signal is at a zero average value. A frequency burst $f_C$ is present, situated in the same position as the conventional PAL burst. The phase of this burst is constant and equal to that of the subcarrier $f_C$. In demodulation the burst is used to rebuild the subcarrier $f_C$ supplied to a conventional synchronous demodulator.

In the receiver 22 the low pass filters 26 and the high pass filters 25, whose response curves are diagrammatically shown in dotted lines in Fig. 5, are used for separating in and V.

While but some embodiments of the invention have been illustrated and described, it is obvious that a number of changes and modifications can be made without departing from the scope of the invention.

## Claims

1. A method of transmitting color television signals on two channels for broadcasting from satellite, characterized in that it comprises the steps of transmitting on the first channel the luminance information in the whole available band and on the second channel the R-Y and B-Y chrominance information in the whole available band.

2. A method as claimed in claim 1, characterized in that the chrominance information is transmitted by means of a time division multiplex i.e. in the first half of the active line there is transmitted one of the chrominance components and in the second half the other component.

3. A method as claimed in claim 1, characterized in that the chrominance information is transmitted by means of a frequency sharing multiplex, i.e. one of the components is transmitted in baseband from O to about 3 MHz and the other component is transmitted on an amplitude modulated subcarrier.

4. A method as claimed in claim 3, characterized in that the amplitude modulated subcarrier is a higher single side band subcarrier.

5. A method as claimed in claim 3, characterized in that the amplitude modulated subcarrier is a vestigial band subcarrier.

6. An apparatus comprising a transmitter and a receiver for carrying out the method as claimed in claim 2, characterized in that the transmitter (14) comprises a compressor (15) having two inputs to which the signals U and V are applied respectively, and an output connected to the transmitting apparatus of the second channel and the receiver (16) comprises an expander (17) whose input is connected to the receiving apparatus of the second channel and whose outputs for the signals U and V are connected to two inputs of a matrix (18) to the third input of which the signal Y transmitted on the first channel is applied.

7. An apparatus comprising a transmitter and a receiver for carrying out the method as claimed in claim 3, characterized in that the transmitter (19) comprises a modulator (20) having the output connected to an input of an adder (21) to a second input of which the output of a low pass filter (27) is connected, and the receiver (22) comprises a demodulator (23) having the output connected to a matrix (24) and the input connected to the output of a high pass filter (25) having, in turn, the input connected to the receiving apparatus of the second channel to which also the input of a low pass filter (26) is connected having the output connected to a second input of the matrix.

FIG. 1

FIG. 2

EP 0 374 128 A2

TO TX CHANNEL A   FROM RX CHANNEL A

FROM
VIDEO
SOURCE

Y

U

V

21

TO TX
CHANNEL B

FROM RX
CHANNEL B

20   27   19

FIG. 3

24

Y

V

U

R

G

B

TO R,G,B
TERMINAL
OF TELEVI-
SION SET

26

23

25

22

EP 0 374 128 A2

LP   HP

V   U

$f_c$   $f_B$

FIG. 4

FIG. 5